# EUROPÄISCHE PATENTANMELDUNG

(11) **EP 2 607 119 A1**
(43) Veröffentlichungstag der Anmeldung: **26.06.2013**
(21) Anmeldenummer: 12197875.3
(22) Anmeldetag: 18.12.2012
(51) Int. Cl.: B60H 1/00, B60S 1/02, E01H 4/02, B62D 33/06

(54) **Pistenraupe**

(30) Priorität: 23.12.2011 DE 102011089836
(71) Anmelder: Kässbohrer Geländefahrzeug AG, 88471 Laupheim (DE)
(72) Erfinder: Mack, Franz, 88457 Kirchdorf (DE); Schwarz, Markus, 89143 Erstetten (DE); Frankenhauser, Klaus, 88487 Baltringen (DE); Weidenkopf, Andreas, 93049 Regensburg (DE)
(74) Vertreter: Patentanwälte Ruff, Wilhelm, Beier, Dauster & Partner

(57) **Zusammenfassung**

Eine Pistenraupe mit einem Kettenfahrwerk, mit einem Fahrerhaus 2, sowie mit außenseitigen Verkleidungsteilen ist bekannt.
Erfindungsgemäß ist wenigstens ein Verkleidungsteil 4 mit wenigstens einer Heizeinrichtung 8a, 8b versehen, die zumindest abschnittsweise eine Außenfläche des Verkleidungsteiles erwärmt.

## Beschreibung

Die Erfindung betrifft eine Pistenraupe mit einem Kettenfahrwerk, mit einem Fahrerhaus, sowie mit außenseitigen Verkleidungsteilen, insbesondere im Bereich des Fahrerhauses.

Eine derartige Pistenraupe ist zur Bearbeitung und Gestaltung von Schneeoberflächen wie auch für den Einsatz in Permafrost-Gebieten allgemein bekannt. Im Betrieb der Pistenraupe bei tiefen Außentemperaturen kann sich Schnee und Eis an außenseitigen Verkleidungsteilen aufbauen. Hierdurch können Funktionseinrichtungen der Pistenraupe wie insbesondere Scheinwerfer, Scheibenwischer, eine Hydraulik für Frontanbaugeräte und ähnliches beeinträchtigt werden.

Aufgabe der Erfindung ist es, eine Pistenraupe der eingangs genannten Art zu schaffen, die Beeinträchtigungen von Funktionseinrichtungen durch Schnee- und Eisaufbau reduziert oder vermeidet.

Diese Aufgabe wird dadurch gelöst, dass wenigstens ein Verkleidungsteil mit wenigstens einer Heizeinrichtung versehen ist, die zumindest abschnittsweise eine Außenfläche des Verkleidungsteiles erwärmt. Durch die erfindungsgemäße Lösung kann Schnee- und Eisaufbau an außenseitigen Verkleidungsteilen im Bereich einer Fahrzeugfront, im Bereich von Fahrzeugseiten und/oder im Bereich eines Fahrzeughecks einer Pistenraupe vermieden werden. Die Heizeinrichtung kann durch Wärmestrahlung oder durch Wärmeübertragung auf die Außenfläche des Verkleidungsteiles wirken. Die Heizeinrichtung kann insbesondere fluiddurchströmte Kanäle umfassen. Als Heizeinrichtung kann auch eine Wärmestrahlungsquelle vorgesehen sein.

In Ausgestaltung der Erfindung ist die Heizeinrichtung innenseitig mit dem Verkleidungsteil verbunden. Vorzugsweise liegen entsprechende Heizfunktionselemente der Heizeinrichtung direkt an einer Innenwandung des Verkleidungsteiles an. Vorzugsweise ist das Verkleidungsteil aus einem wärmeleitenden Material gestaltet. Die Wärmeübertragung der innenseitig anliegenden Heizfunktionselemente der Heizeinrichtung führen dann zwangsläufig zu einer Erwärmung der gesamten Fläche des Verkleidungsteiles. Durch die innenseitige Anordnung ist die Heizeinrichtung unsichtbar und verdeckt untergebracht und übt dennoch die gewünschte Funktion aus. Es ist vorteilhaft, wenn die Außenfläche des Verkleidungsteiles durch die Heizeinrichtung auf eine Temperatur oberhalb des Gefrierpunktes von Wasser gebracht wird, gleichzeitig aber keine so starke Aufheizung erfolgt, dass ein Kontakt von Personen mit der Außenfläche zu Schmerzen führen würde. Vorzugsweise erfolgt eine Aufheizung bis auf einen Temperaturbereich der Außenfläche zwischen 0°C und +50°C.

In weiterer Ausgestaltung der Erfindung umfasst die Heizeinrichtung fluiddurchströmte Heizkanäle, die innenseitig an dem Verkleidungsteil anliegen. Vorzugsweise sind die fluiddurchströmten Heizkanäle an einen ohnehin vorhandenen Heiz- oder Kühlkreislauf der Pistenraupe angeschlossen, insbesondere an wenigstens einen Wärmetauscher für eine Heizung des Fahrerhauses. Es ist auch möglich, für die Heizeinrichtung einen separaten Wärmetauscher vorzusehen, der an einen Kühlkreislauf des Verbrennungsmotors angeschlossen ist und Wärme des Kühlkreislaufes des Verbrennungsmotors an den Heizkreislauf der Heizeinrichtung für das Verkleidungsteil überträgt.

In weiterer Ausgestaltung der Erfindung ist das Verkleidungsteil als frontseitige Verkleidungsmaske unterhalb einer Frontscheibe des Fahrerhauses gestaltet, und die Heizkanäle sind an der dem Fahrerhaus zugewandten Innenseite der Verkleidungsmaske verlegt. Diese Ausgestaltung ist besonders vorteilhaft, da die frontseitige Verkleidungsmaske bei einer Pistenraupe im Fahrbetrieb besonderen Beanspruchungen durch Eis und Schnee ausgesetzt ist. Zudem können in der frontseitigen Verkleidungsmaske auch Lagerungen der Scheibenwischer oder Öffnungen für frontseitige Scheinwerfer vorgesehen sein. Um die Funktionen dieser Scheibenwischer oder der Scheinwerfer nicht zu beeinträchtigen, ist die erfindungsgemäße Beheizung der frontseitigen Verkleidungsmaske vorgesehen.

In weiterer Ausgestaltung der Erfindung ist die Verkleidungsmaske als faserverstärktes Kunststoffbauteil gestaltet, und die Heizkanäle sind in das Kunststoffbauteil einlaminiert. Dadurch kann die Verkleidungsmaske als vormontierte Baueinheit gemeinsam mit den bereits einlaminierten Heizkanälen am Fahrzeug montiert werden. Entsprechende Anschlüsse der Heizkanäle können mit fahrzeugseitigen Wärmetauschern verbunden werden.

In weiterer Ausgestaltung der Erfindung sind die Heizkanäle an wenigstens einen Heizkreislauf einer Fahrerhausheizung angeschlossen. Dadurch kann die wenigstens eine Heizeinrichtung für die frontseitige Verkleidungsmaske auf vorhandene Heizkreisläufe zugreifen.

In weiterer Ausgestaltung der Erfindung umfasst die Fahrerhausheizung zwei Wärmetauscher, die für die Verteilung einer Heizwirkung im Fahrerhaus vorgesehen sind, und die Heizkanäle sind in zwei separate, links- und rechtsseitig an der Verkleidungsmaske verteilte Heizkreisläufe unterteilt, die jeweils einem Wärmetauscher zugeordnet sind. Durch diese Ausgestaltung sind für die über eine gesamte Breite des Fahrerhauses verlaufende frontseitige Verkleidungsmaske zwei Heizeinrichtungen vorgesehen, die je einer Hälfte der Verkleidungsmaske zugeordnet sind.

Alternativ ist es möglich, lediglich einen einzelnen Heizkreislauf vorzusehen, der mittels wenigstens eines Verteilers die Verteilung der Heizwirkung im Fahrerhaus erzielt.

In weiterer Ausgestaltung der Erfindung sind die Heizkanäle als metallische Heizrohre gestaltet. Dadurch weisen die Heizkanäle zum einen eine ausreichende Robustheit auf. Zum anderen ist eine gute Wärmeübertragung aufgrund der Wärmeleitfähigkeit der metallischen Heizrohre an die Verkleidungsmaske gewährleistet.

Gemäß einer weiteren Ausgestaltung sind die Heizkanäle als Kunststoff-Heizrohre gestaltet. Dies ermöglicht eine einfache und kostengünstige Herstellung.

Erfindungsgemäß ist auch eine frontseitige Verkleidungsmaske für eine bei Temperaturen unter dem Gefrierpunkt zu betreibende Pistenraupe vorgesehen, die mit wenigstens einer Heizeinrichtung zur Beheizung einer Außenfläche der Verkleidungsmaske versehen ist, wobei die wenigstens eine Heizeinrichtung die zuvor beschriebenen Merkmale umfassen kann.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch eine Frontansicht einer Ausführungsform einer erfindungsgemäßen Pistenraupe,
- Fig. 2: ein Fahrerhaus der erfindungsgemäßen Pistenraupe mit einer Ausführungsform einer erfindungsgemäßen frontseitigen Verkleidungsmaske und
- Fig. 3: in vergrößerter schematischer Darstellung die frontseitige Verkleidungsmaske des Fahrerhauses nach Fig. 2.

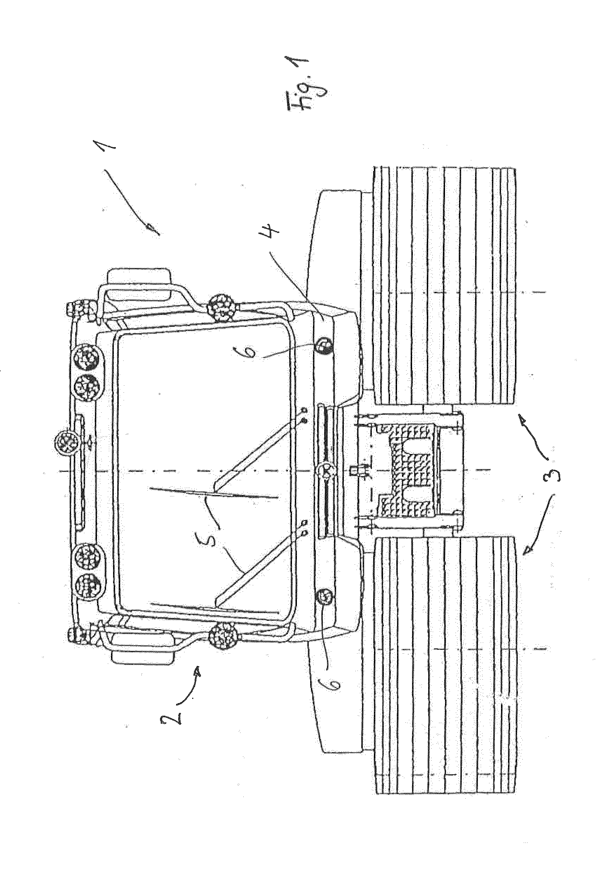

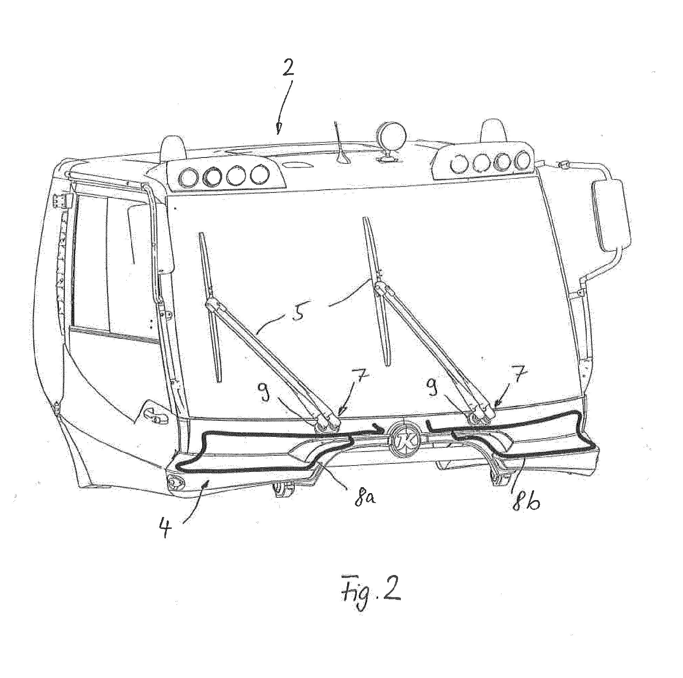

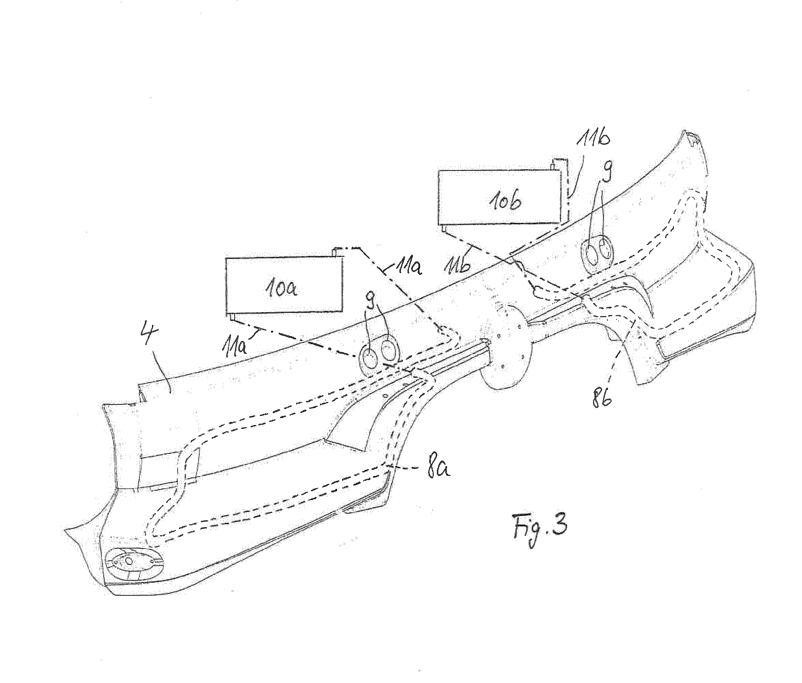

Eine Pistenraupe 1 nach Fig. 1 dient zur Gestaltung und Pflege von Schneeflächen, vorzugsweise in Skigebieten. Die Pistenraupe 1 kann auch in Permafrost-Gebieten zum Transport von Ausrüstung und für ähnliche Funktionen eingesetzt werden. Die Pistenraupe 1 weist ein Kettenfahrwerk 3 auf. Frontseitig ist die Pistenraupe 1 mit einem Fahrerhaus 2 versehen, das eine große Frontscheibe umfasst. Unterhalb der Frontscheibe ist das Fahrerhaus 2 mit einem Verkleidungsteil in Form einer frontseitigen Verkleidungsmaske 4 versehen. Die frontseitige Verkleidungsmaske 4 ist als einteiliges, glasfaserverstärktes Kunststoffbauteil gestaltet, wie anhand der Fig. 2 und 3 erkennbar ist. Die Verkleidungsschürze 4 kann Aussparungen zur Aufnahme von Frontscheinwerfern 6 aufweisen. Diese sind bei der Verkleidungsmaske nach den Fig. 2 und 3 nicht dargestellt. Die Verkleidungsmaske 4 weist zudem Aussparungen 9 für Wischlagerungen 7 von zwei Scheibenwischern 5 auf, die zum Wischen der Frontscheibe des Fahrerhauses 2 vorgesehen sind. Die frontseitige Verkleidungsmaske 4 wird an tragenden Teilen des Fahrerhauses 2 lösbar befestigt. Die Verkleidungsmaske 4 erstreckt sich über die gesamte Breite des Fahrerhauses 2 und ist unterhalb der Frontscheibe des Fahrerhauses 2 angeordnet. Die Verkleidungsmaske 4 ist rückseitig, d.h. auf ihrer zum Fahrerhaus 2 gewandten Innenseite, mit zwei Heizeinrichtungen 8a, 10a, 11a; 8b, 10b, 11b versehen, die zum Aufheizen der Verkleidungsmaske 4 dienen. Die eine Heizeinrichtung 8a, 10a, 11a ist einer - von vorne gesehen - linken Hälfte der Verkleidungsmaske und die andere Heizeinrichtung 8b, 10b, 11b der rechten Hälfte der Verkleidungsmaske 4 zugeordnet. Beide Heizeinrichtungen umfassen einen oder mehrere als Heizfunktionselemente dienende Heizkanäle, die durch jeweils ein ähnlich einer Heizschlange über einen Flächenabschnitt der Verkleidungsmaske 4 verlegtes metallisches Heizrohr gebildet sind. Wie anhand der Fig. 2 und 3 erkennbar ist, ist jedes Heizrohr 8a, 8b nach Art einer Schlaufe über die jeweilige Hälfte der Verkleidungsmaske 4 verlegt und weist an seinen gegenüberliegenden Endbereichen jeweils einen Anschlussstutzen auf, die über Anschlussleitungen 11a, 11b an einen zugehörigen Wärmetauscher 10a, 10b angeschlossen werden zu können. Die metallischen Heizrohre 8a, 8b sind vorzugsweise aus einer Kupferlegierung oder aus einer Leichtmetalllegierung gestaltet und bei der Herstellung des die Verkleidungsmaske 4 bildenden, glasfaserverstärkten Kunststoffbauteiles bereits in die Verkleidungsmaske 4 mit einlaminiert. Damit sind die schlaufenförmig verlegten Heizrohre 8a, 8b in die Verkleidungsmaske 4 integriert. Die Heizrohre 8a, 8b sind im Bereich der Innenseite, d.h. der Rückseite der Verkleidungsmaske 4 angeordnet und damit von vorne, d.h. von der Außenfläche der Verkleidungsmaske 4 her, nicht sichtbar. Die Außenfläche der Verkleidungsmaske 4 wird demzufolge durch die Heizeinrichtungen optisch nicht beeinträchtigt. Die Wärmetauscher 10a, 10b, sind beim dargstellten Ausführungsbeispiel die Wärmetauscher, die im Fahrerhaus 2 für eine entsprechende Fahrerhausheizung ohnehin vorhanden sind. Gespeist werden die Wärmetauscher 10a, 10b von einem Kühlkreislauf eines Verbrennungsmotors der Pistenraupe 1, der gemeinsam mit hydraulischen Komponenten einen Fahrantrieb für das Kettenfahrwerk 3 bildet.

Durch die dargestellten Heizeinrichtungen kann entsprechend aufgeheiztes Fluid der Kühl- bzw. Heizkreisläufe durch die Heizrohre 8a, 8b geleitet werden, wodurch aufgrund der Integration der Heizrohre 8a, 8b in die Verkleidungsmaske 4 eine Erwärmung der Verkleidungsmaske 4 erfolgt. Diese Erwärmung bewirkt in Verbindung mit der Wärmeleitfähigkeit des glasfaserverstärkten Kunststoffmaterials der Verkleidungsmaske 4 eine Aufwärmung der Fläche der Verkleidungsmaske 4 und damit auch der von vorne sichtbaren Außenfläche der Verkleidungsmaske 4. Diese Erwärmung führt dazu, dass sich auf der Außenfläche der frontseitigen Verkleidungsmaske 4 kein Schnee oder Eis aufbauen kann, das Funktionen der Pistenraupe 2 beeinträchtigen könnte. Durch die Vermeidung eines Schnee- und Eisaufbaus wird insbesondere gewährleistet, dass die Wischfunktion der Scheibenwischer 5 und der Wischlagerung 7 nicht beeinträchtigt ist. Falls in der Verkleidungsmaske 4 Frontscheinwerfer 6 integriert sind, wird auch die Leuchtfunktion dieser Scheinwerfer aufgrund der Beheizung der Verkleidungsmaske 4 nicht beeinträchtigt.

## Patentansprüche

1. Pistenraupe mit einem Kettenfahrwerk, mit einem Fahrerhaus, sowie mit außenseitigen Verkleidungsteilen, insbesondere im Bereich des Fahrerhauses, **dadurch gekennzeichnet, dass** wenigstens ein Verkleidungsteil (4) mit wenigstens einer Heizeinrichtung (8a, 10a, 11a; 8b, 10b, 11b) versehen ist, die zumindest abschnittsweise eine Außenfläche des Verkleidungsteiles (4) erwärmt.

2. Pistenraupe nach Anspruch 1, **dadurch gekennzeichnet, dass** die Heizeinrichtung (8a, 10a, 11a; 8b, 10b, 11b) innenseitig mit dem Verkleidungsteil (4) verbunden ist.

3. Pistenraupe nach Anspruch 1 oder 2, **dadurch gekennzeichnet, dass** die Heizeinrichtung fluiddurchströmte Heizkanäle (8a, 8b) umfasst, die innenseitig an dem Verkleidungsteil (4) anliegen.

4. Pistenraupe nach wenigstens einem der vorhergehenden Ansprüche, **dadurch gekennzeichnet, dass** das Verkleidungsteil als frontseitige Verkleidungsmaske (4) unterhalb einer Frontscheibe des Fahrerhauses (2) gestaltet ist, und dass die Heizkanäle (8a, 8b) an der dem Fahrerhaus (2) zugewandten Innenseite der Verkleidungsmaske (4) verlegt sind.

5. Pistenraupe nach Anspruch 4, **dadurch gekennzeichnet, dass** die Verkleidungsmaske (4) als faserverstärktes Kunststoffbauteil gestaltet ist, und dass die Heizkanäle (8a, 8b) in das Kunststoffbauteil einlaminiert sind.

6. Pistenraupe nach Anspruch 4 oder 5, **dadurch gekennzeichnet, dass** die Heizkanäle (8a, 8b) an wenigstens einen Heizkreislauf einer Fahrerhausheizung angeschlossen sind.

7. Pistenraupe nach Anspruch 6, **dadurch gekennzeichnet, dass** die Fahrerhausheizung zwei Wärmetauscher (10a, 10b) umfasst, die für die Verteilung einer Heizwirkung im Fahrerhaus (2) vorgesehen sind, und dass die Heizkanäle (8a, 8b) in zwei separate, links- und rechtsseitig an der Verkleidungsmaske (4) verteilte Heizkreisläufe unterteilt sind, die jeweils einem Wärmetauscher (10a, 10b) zugeordnet sind.

8. Pistenraupe nach einem der Ansprüche 3 bis 7, **dadurch gekennzeichnet, dass** die Heizkanäle als metallische Heizrohre gestaltet sind.

9. Frontseitige Verkleidungsmaske für eine Pistenraupe, insbesondere zur Schneeflächengestaltung und -pflege, die mit wenigstens einer Heizeinrichtung (8a, 10a, 11a; 8b, 10b, 11b) zur Erwärmung einer Außenfläche der Verkleidungsmaske (4) versehen ist.
